# EUROPÄISCHE PATENTSCHRIFT

(11) **EP 1 375 696 B1**
(45) Veröffentlichungstag und Bekanntmachung des Hinweises auf die Patenterteilung: **03.09.2008**
(21) Anmeldenummer: 03012651.0
(22) Anmeldetag: 04.06.2003
(51) Int. Cl.: C23C 4/04, C23C 28/00, C23C 30/00, F01D 5/28

(54) **Schichtsystem für die Rotor-/Statordichtung einer Strömungsmaschine**
Coatingsystem for the rotor/stator sealing of a turbo machine
Système de revêtement de joint d'étanchéité de rotor/stator d'une turbo machine

(30) Priorität: 10.06.2002 DE 10225532
(43) Veröffentlichungstag der Anmeldung: 02.01.2004
(73) Patentinhaber: MTU Aero Engines GmbH, 80995 München (DE)
(72) Erfinder: Grunke, Richard, 85716 Lohhof (DE); Peichl, Lothar, Dr., 85221 Dachau (DE); Schweitzer, Klaus, Dr., 82343 Niederpöcking (DE)

(56) Entgegenhaltungen:
- EP-A- 0 694 627
- EP-A- 0 765 951
- EP-A- 0 965 730
- US-A- 4 422 648
- US-A- 4 936 745
- US-A1- 2002 197 503
- US-A1- 2003 054 196
- FRIEDRICH C J ET AL: "LANTHANUM HEXAALUMINATE THERMAL BARRIER COATINGS" CERAMIC ENGINEERING AND SCIENCE PROCEEDINGS, COLUMBUS, US, Bd. 22, Nr. 4, 2001, Seiten 375-382, XP009007230 ISSN: 0196-6219

## Beschreibung

Die Erfindung betrifft ein Schichtsystem für die Rotor-/ Statordichtung einer Strömungsmaschine, das auf ein metallisches Bauteil aufgebracht ist, das gegenüber einem relativ zu diesem beweglichen, weiteren Bauteil einlauffähig ist und das eine auf das metallische Bauteil aufgebrachte Haftschicht sowie einen darauf aufgebrachten, wenigstens zwei Schichten umfassenden Einlaufbelag aufweist, wobei die an die Haftschicht angrenzende, erste Schicht relativ zu der zweiten Schicht härter ist, und wobei die zweite Schicht einlauffähig ist, sowie eine Strömungsmaschine, insbesondere eine Gasturbine.

Um unerwünschte, den Wirkungsgrad von Gasturbinentriebwerken beeinflussende Spaltverluste gering zu halten, ist es erforderlich, den Spalt zwischen den hochtourig drehenden Rotorschaufeln und dem den Rotor umgebenden, zum Stator gehörenden Gehäuse möglichst dauerhaft gering zu halten, d.h. eine möglichst gute Dichtwirkung zu erzielen.

Das Spaltmaß dieser Spalte ist bekanntlich nicht konstant, sondern unterliegt während der unterschiedlichen Betriebsphasen des Gasturbinentriebwerks Veränderungen. So erfahren u. a. die Rotorschaufeln unter hohen Betriebsbelastungen aufgrund der thermischen Beanspruchung und der wirkenden Zentrifugalkraft eine Streckung in radialer Richtung, während das Gehäuse nur einer thermischen Dehnung unterliegt. Diese unterschiedliche thermische Reaktionscharakteristik führt zu den zu beobachtenden Veränderungen des Spaltmaßes.

Damit die unterschiedlichen thermischen Reaktionscharakteristika von Rotorschaufeln mit dem die Rotorschaufeln umgebenden Gehäuse und der Forderung nach geringem Spaltmaß zwischen den Schaufelspitzen und dem Gehäuse berücksichtigt wird, ist es bekannt, zwischen den Schaufelspitzen der Rotorschaufeln und dem umgebenden Gehäuse ein Anstreifen bzw. Einlaufen zuzulassen. Um hierbei Beschädigungen der Schaufelspitzen der Rotorschaufeln und des umgebenden Gehäuses auszuschließen, ist auf die Schaufelspitzen der Rotorschaufeln häufig eine so genannte Abrasivbeschichtung aufgebracht, während das umgebende Gehäuse mit einem entsprechenden Einlaufbelag ausgekleidet ist.
Beim Anstreifen bzw. Einlaufen der Schaufelspitze an dem in das umgebende Gehäuse eingebrachten Einlaufbelag schneiden bzw. reiben nun die auf die Schaufelspitze aufgebrachten Abrasivpartikel in den Einlaufbelag und tragen diesen ab.

Um den Schaufelspitzenverschleiß möglichst gering zu halten, ist es weiterhin bekannt, relativ weiche Einlaufbeläge, d. h. Einlaufbeläge mit geringer Abriebfestigkeit, zu verwenden. Einlaufbeläge mit geringer Abriebfestigkeit verfügen zudem über eine gute Wärmedämmung und erlauben aufgrund ihrer guten Einlauffähigkeit Einlauftiefen von mehreren Millimeter, ohne dass Schaufelbeschädigungen auftreten.

Ein derartiger Einlaufbelag ist in der US 5,434,210 und der US 4,936,745 beschrieben und dargestellt.

Als Nachteilig erweist sich jedoch der Umstand, dass die weichen Einlaufbeläge erosionsempfindlich sind, über eine schlechte Thermowechselbeständigkeit verfügen, was zu einer eingeschränkten Lebensdauer führt.

Die EP 0 765 951 B1 offenbart ein Einlaufbelagsystem mit drei keramischen Schichten, die segmentiert und aus Hohlkugelpulver hergestellt sind. Nachteilig dabei ist, dass die der Haftschicht benachbarte, keramische (Grund-)Schicht aufgrund des Hohlkugelpulvers wenig erosionsbeständig ist. Zudem ist das System aufgrund der im Hinblick auf die Zusammensetzung gradierte Zwischenschicht teuer und aufwendig herzustellen.

Das Dokument EP-A-0 965 730 offenbart ein Schichtsystem für abrasionsbeanspruchte Teile von Gasturbinen, welches eine metallische Haftschicht, vorzugsweise aus MCrAIY, sowie zwei keramische Schichten aufweist. Die oberste Schicht (abradable layer) ist einlauffähig, z.B. durch eine definierte Porosität. Die unter dieser liegende Schicht (dense layer) ist härter als die oberste Schicht und somit erosionsfester. Zur Verbesserung der Haftung zwischen Metall und Keramik ist eine zusätzliche Schicht aus Aluminiumoxid (alumina) vorhanden.

Das Dokument US-A-4 422 648 offenbart ein vergleichbares Schichtsystem für Gasturbinenbauteile. Die Besonderheit liegt hier darin, dass die einlauffähige, oberste Schicht zumindest stromaufwärts des Bereiches mit Reibkontakt mit einer höheren Dichte ausgeführt und dort somit erosionsfester ist.

Der Erfindung liegt die Aufgabe zugrunde, ein Schichtsystem der eingangs beschriebenen Gattung zu schaffen, das einen im Hinblick auf einfache Herstellung, Lebensdauer und Einlauffähigkeit optimiert ist. Ferner soll eine Strömungsmaschine mit einem in dieser Weise optimierten Schichtsystem bereitgestellt werden.

Diese Aufgabe wird durch die kennzeichnenden Merkmale der Ansprüche 1 und 13 gelöst.

Erfindungsgemäß weist die Haftschicht wenigstens bereichsweise eine oberflächenseitig eine größere Rauhigkeit erzeugende Porosität auf. Die Porosität der Haltschicht nimmt zum Bauteil hin ab, wodurch sich eine hinsichtlich Porosität gradierte Haftschicht ergibt. Durch die zum Bauteil hin geringere oder gegen Null gehende Porosität der Haftschicht wird die Gasdichtigkeit gewährleistet, und durch die oberflächenseitig eine Rauhigkeit erzeugende, größere Porosität zum Einlaufbelag hin die Haftfähigkeit verbessert, wodurch die Wahrscheinlichkeit des Abplatzens des Einlaufbelags verringert und mithin die Lebensdauer des Schichtsystems insgesamt weiter verbessert wird.

Die Härte der Schichten des Einlaufbelags nimmt mit zunehmender Porosität der Schichten ab. Infolgedessen kann die geringere Härte der zweiten Schicht durch eine Porosität oder durch eine gegenüber der ersten Schicht größere Porosität eingestellt werden, wobei die zweite Schicht in einer Ausgestaltung einer Porosität im Bereich von 20 bis 35 Vol.-% aufweisen kann. Die erste Schicht kann in einer zweckmäßigen Ausgestaltung eine Porosität im Bereich von 5 bis 20 Vol.-%, insbesondere 15 bis 20 Vol.-%, aufweisen.

In einer weiteren Ausgestaltung des Schichtsystems kann die Porosität, insbesondere der zweiten Schicht, durch Zugabe von Kunststoffpartikeln, insbesondere aus Polyester, und anschließendem Ausbrennen von diesen eingestellt werden, wobei die verdampfenden oder verbrennenden Kunststoffpartikel die Hohlräume hinterlassen.

Die härtere, erste Schicht kann aus einem massiven, insbesondere geschmolzenen und gebrochenen, Pulver hergestellt sein, was die Erosionsbeständigkeit und somit die Lebensdauer des Schichtsystems erhöht.

Anders als die üblicherweise metallische Haftschicht, sind die wenigstens zwei Schichten des Einlaufbelags vorwiegend keramisch.

Die Schichten des Einlaufbelags können auf Basis von yttriumstabilisiertem Zirkonoxid (ZrO₂) und/oder Lanthanhexaaluminat ausgeführt sein, wobei insbesondere Lanthanhexaaluminat besonders widerstandsfähig gegen unerwünschtes Sintern bei Betrieb in einer Strömungsmaschine und längerer Hochtemperatureinwirkung ist.

Die der zweiten Schicht zugewandte Seite der härteren, ersten Schicht ist zweckmäßig so positioniert, dass ein Einlaufen des weiteren Bauteils, insbesondere des Rotors, in die erste Schicht unter normalen Betriebsbedingungen nicht zu erwarten ist, wodurch die Haftung, Erosions- und Thermowechselbeständigkeit der ersten Schicht und somit des Einlaufbelags insgesamt deutlich verbessert wird, und das mit dem Schichtsystem zusammenwirkende, weitere Bauteil (Rotor) geschont wird. Zudem wird durch die daraus resultierende geometrische Beständigkeit der härteren, ersten Schicht und mithin des Einlaufbelags insgesamt eine gleichbleibend gute Dichtwirkung im Zusammenwirken mit dem relativ dazu bewegten, weiteren Bauteil (Rotor) bewirkt.

Weitere Ausgestaltungen der Erfindung sind in den Unteransprüchen beschrieben.

Vorteile ergeben sich auch in der Reparaturfähigkeit des Einlaufbelages. So ist aufgrund der geringeren Erosionsbeständigkeit der zweiten Schicht mit einem früheren Verschleiß dieser Schicht gegenüber der ersten, erosionsfesten und sicher haftenden Schicht zu rechnen. Folglich beschränken sich die Reparaturmaßnahmen nur auf diese zweite Schicht. Eine kostenintensive Erneuerung des gesamten Einlaufbelages ist nicht notwendig.

Die Erfindung ist nachfolgend anhand eines in der Zeichnung vereinfacht dargestellten Ausführungsbeispiels beschrieben. Es zeigen:

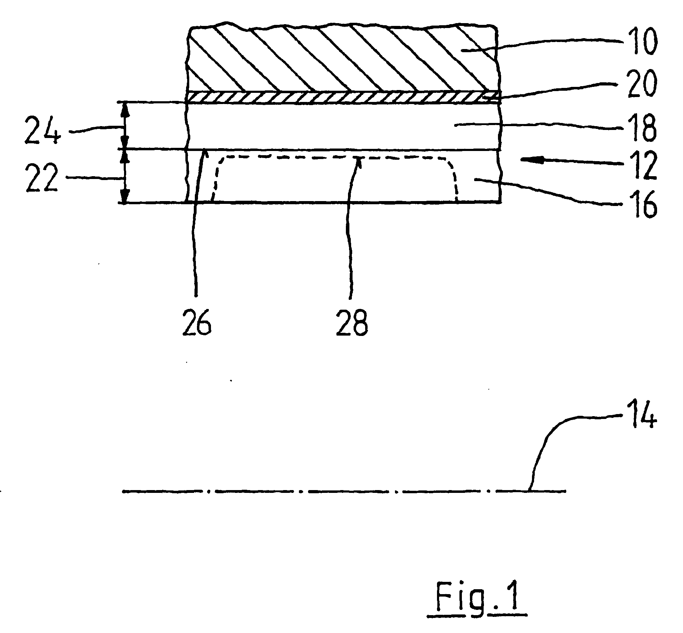

- Fig. 1: eine Schnittdarstellung eines Abschnitts eines Gehäusesegments einer Gasturbine mit dem erfindungsgemäß ausgeführten, einen Einlaufbelag umfassenden Dichtsystem.

Ein in Fig. 1 nur teilweise dargestelltes, einen Teil eines Stators bildendes Gehäusesegment 10 eines Gasturbinentriebwerks ist mit einem insgesamt mit der Bezugsziffer 12 bezeichneten Einlaufbelag und zwischenliegender Haftschicht 20 versehen.

Der Einlaufbelag 12 soll einen möglichst geringen Radialspalt zwischen Gehäuse 10 und den hier nicht dargestellten Rotorschaufeln des Gasturbinentriebwerks ermöglichen.

Der Einlaufbelag 12 weist in Bezug auf eine Drehachse 14 des Gasturbinentriebwerks eine radial innenliegende zweite Schicht 16 und eine radial weiter außen liegende, härtere erste Schicht 18 auf.

Die Haftung des Einlaufbelages 12 mit dem Gehäuse 10 ist über die Haftschicht 20 in Form einer MCrAIY-Legierung sichergestellt, wobei die Haftschicht 20 zur ersten Schicht 18 des Einlaufbelags 12 hin eine oberflächenseitig definierte Rauhigkeit erzeugende Porosität aufweist. Der Buchstabe M bei der MCrAIY-Legierung steht insbesondere für Ni und/oder Co. Das Gehäusesegment 10 besteht bei den vorliegenden Anwendungen insbesondere aus Legierungen auf Basis von Ti, Ni oder Co.

Die zweite Schicht 16 des Einlaufbelages 12 ist in einer Dicke 22 ausgeführt und verfügt über eine geringere Härte als die erste Schicht 18, was eine gute Einlauffähigkeit bewirkt, und über eine gute Wärmedämmung. Die Dicke 22 der Schicht 16 des Einlaufbelages 12 ist dabei so gewählt, dass die Dicke 22 mindestens der zu erwartenden maximalen Einlauftiefe der Schaufelspitzen der Rotorschaufeln entspricht.

Im vorliegenden Ausführungsbeispiel ist die zweite Schicht 16 aus einem porösen, yttrimstabililisierten Zirkonoxid ausgeführt. Falls eine verbesserte Sinterbeständigkeit gewünscht ist, kann diese Schicht 16, ebenso wie die erste Schicht 18, aus Lanthanhexaaluminat ausgeführt sein.

Die Härte bzw. Abriebfestigkeit der zweiten Schicht 16 des Einlaufbelages 12 ist dabei so gewählt, dass selbst bei der zu erwarteten Einlauftiefe, die, wie bereits erwähnt, maximal der Dicke 22 der zweiten Schicht 16 entspricht, keine Schaufelbeschädigungen auftreten.

Auch die zwischen zweiter Schicht 16 und Gehäuse 10 angeordnete erste Schicht 18 des Einlaufbelages 12 ist ein yttriumsstabilisiertes Zirkonoxid (ZrO₂) oder alternativ ein Lanthanhexaaluminat. Im Gegensatz zur zweiten Schicht 16 weist die erste Schicht 18 des Einlaufbelages 12 eine größere Härte auf, die z. B. aus einer geringeren oder nicht vorhandenen Porosität resultiert. Die größere Härte der ersten Schicht 18 verbessert die Erosionsbeständigkeit, die Thermowechselbeständigkeit und somit die Haltbarkeit des Einlaufbelags 12.

Die Dicke 24 der ersten Schicht 18 beträgt 0,2 bis 10,0 mm, wobei die genannte obere Grenze insbesondere die Verhältnisse bei großen, stationären Gasturbinen berücksichtigt und ein bevorzugter Bereich bei Flugtriebwerken bei 0,2 bis 2,0 mm und insbesondere bei 0,5 bis 0,8 mm liegt. Eine der zweiten Schicht 16 zugewandte Seite 26 der ersten Schicht 18 ist so positioniert, d.h. im Durchmesser so gewählt, dass ein Einlaufen eines relativ hierzu bewegten Bauteils, wie es mit der gestrichelten Einlaufspur 28 dargestellt ist, welche z. B. von einer Schaufelspitze oder einem sog. Dichtfin einer Labyrinthdichtung herrühren kann, in die härtere, erste Schicht 18 unter normalen Betriebsbedingungen nicht zu erwarten ist.

Die härtere, erste Schicht 18 des Einlaufbelages 12 stellt somit sicher, dass ein vorzeitiger Verschleiß des Einlaufbelages 12 vermieden wird und garantiert in Verbindung mit der guten Thermowechselbeständigkeit dadurch längere Überholintervalle des Gasturbinentriebwerks.

## Patentansprüche

1. Schichtsystem für die Rotor-/ Statordichtung einer Strömungsmaschine, insbesondere einer Gasturbine, das auf ein metallisches Bauteil (10) aufgebracht ist, das gegenüber einem relativ zu diesem beweglichen, weiteren Bauteil einlauffähig ist und das eine auf das metallische Bauteil (10) aufgebrachte Haftschicht (20) sowie einen darauf aufgebrachten, wenigstens zwei Schichten (16, 18) umfassenden Einlaufbelag (12) aufweist, wobei die an die Haftschicht (20) angrenzende, erste Schicht (18) relativ zu der zweiten Schicht (16) härter ist, und wobei die zweite Schicht (16) einlauffähig ist, **dadurch gekennzeichnet, dass** die Haftschicht (20) wenigstens bereichsweise eine oberflächenseitig eine Rauhigkeit erzeugende Porosität aufweist, und dass die Porosität der Haftschicht (20) zum Bauteil (10) hin abnimmt.

2. Schichtsystem nach Anspruch 1, **dadurch gekennzeichnet, dass** die geringere Härte der zweiten Schicht (16) durch eine Porosität oder durch eine gegenüber der ersten Schicht (18) größere Porosität eingestellt ist.

3. Schichtsystem nach Anspruch 2, **dadurch gekennzeichnet, dass** die zweite Schicht (16) eine Porosität im Bereich von 20 bis 35 Vol.-% aufweist.

4. Schichtsystem nach Anspruch 2 oder 3, **dadurch gekennzeichnet, dass** die erste Schicht (18) eine Porosität im Bereich von 5 bis 20 Vol.-%, insbesondere von 15 bis 20 Vol.-%, aufweist.

5. Schichtsystem nach einem der Ansprüche 2 bis 4, **dadurch gekennzeichnet, dass** die Porosität der zweiten Schicht (16) durch Zugabe von Kunststoffpartikeln, insbesondere aus Polyester, und anschließendes Ausbrennen von diesen eingestellt ist.

6. Schichtsystem nach einem der vorherigen Ansprüche, **dadurch gekennzeichnet, dass** die erste Schicht (18) aus einem massiven, insbesondere geschmolzenen und gebrochenen, Pulver hergestellt ist.

7. Schichtsystem nach einem der vorherigen Ansprüche, **dadurch gekennzeichnet, dass** die Schichten (16, 18) des Einlaufbelags (12) vorwiegend keramisch sind.

8. Schichtsystem nach Anspruch 7, **dadurch gekennzeichnet, dass** die Schichten (16, 18) des Einlaufbelags (12) auf Basis von yttriumstabilisiertem Zirkonoxid (ZrO₂) und/oder Lanthanhexaaluminat ausgeführt sind.

9. Schichtsystem nach einem der vorherigen Ansprüche, **dadurch gekennzeichnet, dass** die zweite Schicht (16) eine Dicke (22) von 0,2 bis 10,0 mm, insbesondere von 0,2 bis 2,0 mm oder von 0,5 bis 0,8 mm, aufweist.

10. Schichtsystem nach einem der vorherigen Ansprüche, **dadurch gekennzeichnet, dass** die der zweiten Schicht (16) zugewandte Seite (26) der ersten Schicht (18) so positioniert ist, dass ein Einlaufen (28) des weiteren Bauteils in die erste Schicht (18) unter normalen Betriebsbedingungen nicht zu erwarten ist.

11. Schichtsystem nach einem der vorherigen Ansprüche, **dadurch gekennzeichnet, dass** die Haftschicht (20) metallisch ist und vorzugsweise eine MCrAIY-Legierung umfasst.

12. Schichtsystem nach einem der vorherigen Ansprüche, **dadurch gekennzeichnet, dass** die Haftschicht (20) eine Dicke von 0,25 bis 0,40 mm aufweist.

13. Strömungsmaschine, insbesondere Gasturbine, mit einem um eine Drehachse (14) umlaufenden Rotor, einem den Rotor umgebenden Stator (10) und einem Einlaufbelag (12), der bereichsweise auf dem Stator (10) zur Dichtung zwischen Rotor und Stator (10) aufgebracht ist und ein Einlaufen des Rotors ermöglicht, **dadurch gekennzeichnet, dass** der Einlaufbelag (12) mit einer diesen an den Stator (10) bindenden Haftschicht (20) ein Schichtsystem nach einem der Ansprüche 1 bis 12 bildet.

## Claims

1. A layer system for the rotor/stator seal of a turbo machine, in particular of a gas turbine, which layer system is applied to a metal component (10), is abradable with respect to a further component movable relative thereto, and comprises an adhesive layer (20) applied to the metal component (10) as well as an abradable coating (12) which is applied thereto and comprises at least two layers (16, 18), wherein the first layer (18), adjacent to the adhesive layer (20), is harder relative to the second layer (16), and wherein the second layer (16) is abradable, **characterised in that** the adhesive layer (20) has a porosity, at least in regions, that produces roughness on the surface, and **in that** the porosity of the adhesive layer (20) decreases towards the component (10).

2. A layer system according to claim 1, **characterised in that** the lower hardness of the second layer (16) is established by a porosity or by a greater porosity.. compared with the first layer (18).

3. A layer system according to claim 2, **characterised in that** the second layer (16) has a porosity in the range from 20 to 35 vol.%.

4. A layer system according to claim 2 or 3, **characterised in that** the first layer (18) has a porosity in the range from 5 to 20 vol.%, in particular from 15 to 20 vol.%.

5. A layer system according to any one of claims 2 to 4, **characterised in that** the porosity of the second layer (16) is established by adding plastics particles, in particular polyester particles, and subsequently burning them out.

6. A layer system according to any one of the preceding claims, **characterised in that** the first layer (18) has been produced from a compact, in particular melted and crushed, powder.

7. A layer system according to any one of the preceding claims, **characterised in that** the layers (16, 18) of the abradable coating (12) are predominantly ceramic.

8. A layer system according to claim 7, **characterised in that** the layers (16, 18) of the abradable coating (12) are based on yttrium-stabilised zirconium oxide (ZrO₂) and/or lanthanum hexaaluminate.

9. A layer system according to any one of the preceding claims, **characterised in that** the second layer (16) has a thickness (22) of from 0.2 to 10.0 mm, in particular from 0.2 to 2.0 mm or from 0.5 to 0.8 mm.

10. A layer system according to any one of the preceding claims, **characterised in that** the side (26) of the first layer (18) that faces the second layer (16) is so positioned that abrasion (28) of the first layer (18) by the further component is not to be expected under normal operating conditions.

11. A layer system according to any one of the preceding claims, **characterised in that** the adhesive layer (20) is metallic and preferably comprises a MCrAlY alloy.

12. A layer system according to any one of the preceding claims, **characterised in that** the adhesive layer (20) has a thickness of from 0.25 to 0.40 mm.

13. A turbo machine, in particular a gas turbine, having a rotor rotating about an axis of rotation (14), a stator (10) surrounding the rotor, and an abradable coating (12) which is applied to regions of the stator (10) for the purpose of sealing between the rotor and the stator (10) and which is abradable by the rotor, **characterised in that** the abradable coating (12) forms a layer system according to any one of claims 1 to 12 with an adhesive layer (20) that binds the abradable coating (12) to the stator (10).

## Revendications

1. Système de couches pour le joint d'étanchéité d'un rotor/stator d'une turbomachine, en particulier d'une turbine à gaz, qui est appliqué sur un élément de construction métallique (10) qui peut être rodé par rapport à un autre élément de construction mobile par rapport à ce dernier et qui comporte une couche adhésive (20) appliquée sur l'élément de construction métallique (10) ainsi qu'un revêtement de rodage (12) appliqué sur ce dernier, comportant au moins deux couches (16, 18), dans lequel la première couche (18) adjacente à la couche adhésive (20) est plus dure que la seconde couche (16) et dans lequel la seconde couche (16) peut être rodée, **caractérisé en ce que** la couche adhésive (20) présente, au moins par zones, une porosité générant une rugosité du côté de la surface et **en ce que** la porosité de la couche adhésive (20) diminue en direction de l'élément de construction (10).

2. Système de couches selon la revendication 1, **caractérisé en ce que** la dureté moins importante de la seconde couche (16) est ajustée par une porosité ou par une porosité plus importante par rapport à la première couche (18).

3. Système de couches selon la revendication 2, **caractérisé en ce que** la seconde couche (16) présente une porosité dans la plage comprise entre 20 et 35 % en volume.

4. Système de couches selon la revendication 2 ou 3, **caractérisé en ce que** la première couche (18) présente une porosité dans la plage comprise entre 5 % et 20 % en volume, en particulier entre 15 % et 20 % en volume.

5. Système de couches selon l'une quelconque des revendications 2 à 4, **caractérisé en ce que** la porosité de la seconde couche (16) est ajustée par l'ajout de particules de matière plastique, en particulier en polyester, et par la cuisson ultérieure de celles-ci.

6. Système de couches selon l'une quelconque des revendications précédentes, **caractérisé en ce que** la première couche (18) est fabriquée à partir d'une poudre compacte, en particulier fondue et broyée.

7. Système de couches selon l'une quelconque des revendications précédentes, **caractérisé en ce que** les couches (16, 18) du revêtement de rodage (12) sont majoritairement céramiques.

8. Système de couches selon la revendication 7, **caractérisé en ce que** les couches (16, 18) du revêtement de rodage (12) sont réalisées à base d'oxyde de zirconium (ZrO₂) stabilisé à l'yttrium et/ou d'hexa-aluminate de lanthane.

9. Système de couches selon l'une quelconque des revendications précédentes, **caractérisé en ce que** la seconde couche (16) présente une épaisseur (22) de 0,2 mm à 10,0 mm, en particulier de 0,2 mm à 2,0 mm ou de 0,5 mm à 0,8 mm.

10. Système de couches selon l'une quelconque des revendications précédentes, **caractérisé en ce que** le côté (26) de la première couche (18) dirigé vers la seconde couche (16) est positionné de telle manière qu'un rodage (28) de l'autre élément de construction dans la première couche (18) n'est pas prévisible dans des conditions de fonctionnement normales.

11. Système de couches selon l'une quelconque des revendications précédentes, **caractérisé en ce que** la couche adhésive (20) est métallique et comporte, de préférence, un alliage de MCrAlY.

12. Système de couches selon l'une quelconque des revendications précédentes, **caractérisé en ce que** la couche adhésive (20) présente une épaisseur comprise entre 0,25 mm et 0,40 mm.

13. Turbomachine, en particulier turbine à gaz, avec un rotor tournant autour d'un axe de rotation (14), un stator (10) entourant le rotor et un revêtement de rodage (12) qui est appliquée par zones sur le stator (10) pour assurer l'étanchéité entre le rotor et le stator (10) et qui permet un rodage du rotor, **caractérisée en ce que** le revêtement de rodage (12) forme, avec une couche adhésive (20) liant celui-ci au stator (10), un système de couches selon l'une quelconque des revendications 1 à 12.
